# EUROPÄISCHE PATENTSCHRIFT

(11) **EP 1 131 571 B1**
(45) Veröffentlichungstag und Bekanntmachung des Hinweises auf die Patenterteilung: **12.02.2003**
(21) Anmeldenummer: 99959266.0
(22) Anmeldetag: 30.10.1999
(51) Int. Cl.: F16G 13/16

(54) **KETTENGLIED FÜR ENERGIEFÜHRUNGSKETTEN**
CHAIN LINK FOR ENERGY TRANSMISSION CHAINS
MAILLON POUR CHAINES DE TRANSMISSION D'ENERGIE

(30) Priorität: 17.11.1998 DE 19852913
(43) Veröffentlichungstag der Anmeldung: 12.09.2001
(73) Patentinhaber: Murrplastik System-Technik GmbH, 71567 Oppenweiler (DE)
(72) Erfinder: EHMANN, Bruno, D-73563 Mögglingen (DE); FUNK, Rainer, D-71543 Wüstenrot (DE)
(74) Vertreter: Jeck, Anton, Dipl.-Ing.
(86) Internationale Anmeldenummer: EP9908295
(87) Internationale Veröffentlichungsnummer: WO00029763

(56) Entgegenhaltungen:
- DE-C- 3 516 448
- DE-U- 8 814 076

## Beschreibung

Die Erfindung betrifft ein Kettenglied für Energieführungsketten nach dem Oberbegriff des Anspruchs 1. Ein solches Kettenglied ist aus der DE-A- 35 16 448 bekannt.

Solche Kettenglieder mit Regalen, in die Energieführungsleitungen, die aus elektrischen Kabeln oder aus flexiblen Druckleitungen für Luft oder Flüssigkeiten bestehen können, eingelegt werden, sind in vielfacher Form bekannt.

Eine bekannte Ausführung eines solchen Kettenglieds verwendet eine am Nutboden angebrachte Zahnung, die wie der Trennstegzahn auch in Trennsteglängsrichtung weist. Dadurch können die Trennstege zwischen den beiden Traversen in unterschiedlichen Lagen so festgelegt werden, dass sich unterschiedlich große Regalräume ergeben. Soll die Regalaufteilung des Kettenglieds geändert werden, so muss die Verbindung der oberen Traverse mit den beiden Seitenlaschen des Kettenglieds gelöst, die betreffenden Trennstege in der unteren Traverse umgesetzt und die obere Traverse wieder in die beiden Seitenlaschen eingesetzt werden. Diese Prozedur ist umständlich, und man möchte zumindest teilweise eine einfachere Regalaufteilung ermöglichen.

Andererseits ist auch bereits vorgeschlagen worden, zwischen den die Seitenlaschen verbindenden, beiden Traversen eines Kettenglieds schwergängig, aber frei an diesen Traversen verschiebbare Trennstege vorzusehen, so dass für eine andere Regalaufteilung lediglich diese Trennstege zu verschieben sind.

Die Aufgabe der Erfindung besteht darin, ein Kettenglied der im Oberbegriff des Anspruchs 1 genannten Art zu schaffen, das die Verwendung ein und desselben Trennstegs für die beiden geschilderten Regalaufteilungsarten ermöglicht.

Diese Aufgabe wird mit den Merkmalen des Anspruchs 1 gelöst.

Der Trennsteg kann somit zwischen den beiden Traversen in solcher Weise eingesetzt werden, dass sein Zahn im Eingriff mit der Zahnung in der Traversennut steht. In diesem Fall ist der Trennsteg zwischen den mit den beiden Seiten-laschen des Kettenglieds verbundenen Traversen unverrückbar festgelegt. Er kann nach seitlichem Wenden aber auch in solcher Weise eingesetzt werden, dass sein Zahn zwar in der Nut geführt wird, aber nicht mit der Zahnung im Eingriff steht. In diesem Fall ist der Trennsteg zwischen den Traversen frei verschiebbar. Insbesondere für lange Trennstege kann es vorteilhaft sein, die gleiche Zahnung auch in der anderen Traverse und einen entsprechenden Zahn auch am anderen Längsende des Trennstegs vorzusehen.

Gemäß einer weiteren Ausbildung der Erfindung tritt der Zahn aus einem langgestreckten, in Kettengliedquerrichtung verlaufenden Führungsglied aus, das einstückig mit dem Trennsteg verbunden und in der Nut führbar ist. Durch dieses an der Zahnung geführte Führungsglied wird dem Trennsteg eine höhere Seitenstabilität vermittelt.

Gemäß einer weiteren Ausbildung der Erfindung weist der Trennsteg zumindest an seinem den Zahn tragenden Ende seitliche Klammern auf, die mit der zuge-hörigen Traverse verrastbar sind und mittels denen der Trennsteg an dieser Traverse in Kettengliedquerrichtung verschiebbar ist. Dadurch lässt sich der Trennsteg in einer vorgesehenen Lage bereits beim Einsetzen in die eine Traverse selbsthaltend fixieren.

Gemäß einer weiteren Ausbildung der Erfindung sind die Klammern an ihren Enden mit Köpfen versehen, die sich über die Trennstegstärke hinaus in Kettengliedquerrichtung erstrecken. Damit werden einerseits die Haltekraft der Klammern des Trennstegs an der Traverse und andererseits die Seitenstabilität des Trennstegs vergrößert.

Gemäß einer weiteren Ausbildung der Erfindung ist das dem Zahn gegenüberliegende Trennstegende mittig mit einem langgestreckten, in Kettengliedquerrichtung verlaufenden Führungsglied versehen, das in einer innenseitig in der zugehörigen Traverse angeordneten Nut führbar ist. Diese Ausführung des Trennstegs eignet sich insbesondere für kürzere Trennstege, bei denen es nicht erforderlich ist, eine Zahnung in dieser anderen Traverse und einen Zahn an diesem Trennstegende vorzusehen.

Die Erfindung wird nun anhand eines Ausführungsbeispiels näher erläutert. Es zeigen:
- Fig. 1: einen Querschnitt durch ein aus zwei Seitenlaschen, zwei Traversen und zwei Trennstege gebildetes Kettenglied gemäß der Erfindung,
- Fig. 2: eine Seitenansicht des linken Trennstegs in Fig. 1,
- Fig. 3: eine Draufsicht auf die untere Traverse der Fig. 1 und ein Schnitt der in Fig. 1 gezeigten Trennstege,
- Fig. 4: einen Querschnitt durch die in Fig. 3 dargestellte, untere Traverse und eine Seitenteilansicht des in diese Traverse eingesetzten linken Trennstegs,
- Fig. 5: eine der Fig. 4 ähnliche Ansicht, bei der der Trennsteg nicht in die Traverse eingesetzt ist,
- Fig. 6: eine der Fig. 3 ähnliche Ansicht eines Teils der unteren Traverse mit zwei in die Zahnung eingreifenden Trenn-stegen,
- Fig. 7 u. 8: den Figuren 4 und 5 ähnliche Ansichten, bei denen einer der in Fig. 6 gezeigten Trennstege in die Traverse eingesetzt und nicht eingesetzt ist,
- Fig. 9: eine der Fig. 3 ähnliche Ansicht eines Teils der unteren Traverse mit zwei nicht in die Zahnung eingreifenden Trennstegen und
- Fig. 10 u. 11: den Figuren 4 und 5 ähnliche Ansichten, bei denen einer der in Fig. 9 gezeigten Trennstege in die Traverse eingesetzt und nicht eingesetzt ist.

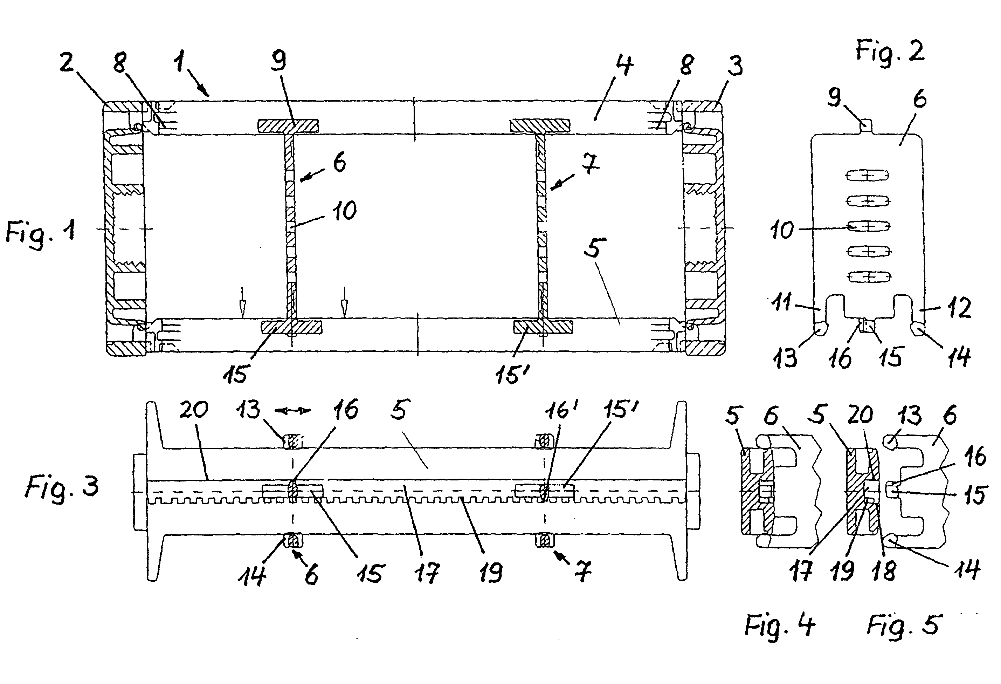

In Fig. 1 ist ein Kettenglied 1 gemäß der Erfindung gezeigt. Das Kettenglied 1 setzt sich aus zwei parallel angeordneten Seitenlaschen 2, 3, zwei mit den Seitenlaschen verbindbaren Traversen 4, 5 und zwei zwischen diesen Traversen angeordneten Trennstegen 6, 7 zusammen. Solche Kettenglieder sind in nicht dargestellter Weise drehbar miteinander zu einer Energieführungskette verbunden, die zur Aufnahme von Energieversorgungsleitungen dient. Diese Leitungen würden in Fig. 1 senkrecht zur Zeichenebene verlaufen.

Der Aufbau der Seitenlaschen ist im Rahmen dieser Erfindung nur insoweit wichtig, als die mit entsprechenden Rastmitteln versehenen Enden der Traversen 4, 5 in Rastausnehmungen an den oberen Schmalseiten und den unteren Schmalseiten der Seitenlaschen 2, 3 verriegelbar sind. Die obere Traverse 4 weist eine bei 8 angedeutete, innenseitige Längsnut auf, die in Traversenlängsrichtung bzw. Kettengliedquerrichtung verläuft und zur Führung der Trennstege 6, 7 dient. Die Trennstege 6, 7 haben hierzu an ihren oberen Längsenden mittig langgestreckte, in Traversenlängsrichtung verlaufende Führungsglieder, wie das Führungsglied 9, die in der Führungsnut 8 laufen.

Die Trennstege 6, 7 sind mit einer Reihe übereinanderliegender Öffnungen, wie der Öffnung 10, versehen, durch die wahlweise nicht dargestellte Sprossen hindurchführbar sind. Diese Sprossen dienen der weiteren Regalaufteilung. Wie aus Fig. 2 hervorgeht, hat jeder Trennsteg ferner zwei seitliche Klammern 11, 12, an deren Enden Rastköpfe 13, 14 mit nach innen gerichteten Rastnasen sitzen. Diese Rastköpfe erstrecken sich nach Fig. 3 über die Trennstegstärke hinaus in Kettengliedquerrichtung. Die Rastnasen greifen hinter Hinter-schneidungen der unteren Traverse 5, wie aus den Figuren 4 und 5 hervorgeht.

Nach Fig. 2 ist am unteren Längsende des Trennstegs mittig ein langgestrecktes, in Kettengliedquerrichtung verlaufendes Führungsglied 15 angeordnet, das einstückig mit dem Trennsteg verbunden ist und aus dem ein in Richtung auf den Rastknopf 13 weisender und damit in Kettengliedlängsrichtung verlaufender Zahn 16 mit etwa quadratischem Querschnitt austritt.

In der in Fig. 3 dargestellten, unteren Traverse 5 ist innenseitig eine in Traversenlängsrichtung bzw. Kettengliedquerrichtung verlaufende Nut 17 vorgesehen. Die untere Seitenwand 18 (Fig. 5) dieser Nut trägt ein Zahnung 19, die sich nach Fig. 3 über die ganze Länge der Traverse 5 erstreckt. Der linke Trennsteg 6 ist so in die Traverse 5 eingesetzt, dass der Zahn 16 nach oben gerichtet ist und an der der Nutwand 18 gegenüberliegenden Nutwand 20 an-liegt und dass das Führungsglied 15 auf der Zahnung 19 geführt wird (s. auch die Figuren 4 und 5). Damit ist der zwischen den Traversen 4, 5 eingefügte Trennsteg in Richtung des Doppelpfeils in Fig. 3 frei verschiebbar, so dass eine Regalaufteilung nach Bedarf durch einfaches Verschieben dieses Trennstegs vorgenommen werden kann.

Bei dem gleich ausgebildeten, rechten, seitlich gewendeten Trennsteg 7 ist der entsprechende Zahn 16' jedoch nach unten gerichtet; er greift in die Zahnung 19 ein. Dabei liegt das entsprechende Führungsglied 15' auf der Zahnung 19 auf. Dieses Trennglied sitzt damit fest zwischen den Traversen 4, 5 und kann für eine andere Regalaufteilung erst nach dem Entfernen der oberen Traverse 4 von den Seitenlaschen 2, 3 umgesetzt werden.

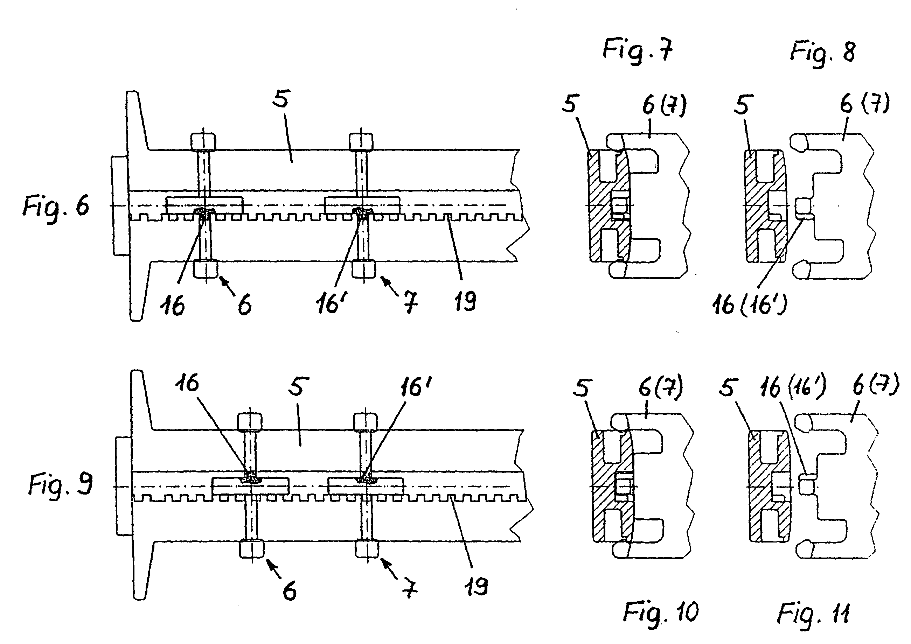

In den Figuren 6 bis 8 sind die beiden dort dargestellten Trennstege 6, 7 so in die untere Traverse 5 eingesetzt, dass beide Zähne 16, 16' in die Zahnung 19 eingreifen. Die Trennstege 6, 7 sind damit unverrückbar fest zwischen den Traversen eingefügt.

In den Figuren 9 bis 11 sind die beiden dort dargestellten Trennstege 6, 7 jedoch so in die untere Traverse 5 eingesetzt, dass die Zähne 16, 16' nicht in die Zahnung 19 eingreifen. Die Trennstege 6, 7 sind hier also in Traversenlängsrichtung frei verschiebbar.

## Patentansprüche

1. Kettenglied für Energieführungsketten mit zwei parallel zueinander angeordneten Seitenlaschen (2, 3), zwei die Seitenlaschen (2, 3) verbindenden Traversen (4, 5), von denen mindestens eine auf ihrer Innenseite eine in Kettengliedquerrichtung verlaufende Nut (17) mit einer Nutzahnung (19) aufweist, sowie zwischen den Traversen (4, 5) angeordneten und mit den Seitenlaschen (2, 3) etwa parallel zueinander verlaufenden Trennstegen (6, 7) mit jeweils mindestens einem mit der Nutzahnung (19) in Eingriff bringbaren Trennstegzahn (16, 16'),
**dadurch gekennzeichnet,**
**dass** der jeweilige Trennsteg (6, 7) zwischen einer Rasterstellung, in der sein Trennstegzahn (16, 16') mit der Nutzahnung (19) in Eingriff steht, und einer Freistellung, in der sein Trennstegzahn (16, 16') mit der Nutzahnung (19) außer Eingriff steht, positionierbar ist.

2. Kettenglied nach Anspruch 1,
**dadurch gekennzeichnet,**
**dass** die Nutzahnung (19) an einer Seitenwand (18) an der Nut (17) ausgebildet ist.

3. Kettenglied nach Anspruch 1 oder 2,
**dadurch gekennzeichnet,**
**dass** die Nutzahnung (19) und der Trennstegzahn (16, 16') in Kettengliedlängsrichtung weisen.

4. Kettenglied nach einem der Ansprüche 1 bis 3,
**dadurch gekennzeichnet,**
**dass** der Trennsteg (6, 7) durch seitliches Wenden um seine Längsrichtung zwischen der Raststellung und der Freistellung überführbar ist.

5. Kettenglied nach einem der Ansprüche 1 bis 4,
**dadurch gekennzeichnet,**
**dass** der Trennstegzahn (16, 16') aus einem langgestreckten, in Kettengliedquerrichtung verlaufenden Führungsglied (15, 15') austritt, das einstückig mit dem Trennsteg (6, 7) verbunden und in der Nut (17) führbar ist.

## Claims

1. Chain link for power transmitting chains, having two sidebars (2, 3), which are disposed parallel to each other, two crosspiece members (4, 5), which join the sidebars (2, 3), and at least one of which members has on its inside a groove (17), which extends in the transverse direction of the chain link and is provided with a groove toothing (19), as well as separating webs (6, 7), which are disposed between the crosspiece members (4, 5) and extend substantially parallel to each other with the sidebars (2, 3), each web being provided with at least one separating web tooth (16, 16') which can be brought into engagement with the groove toothing (19), **characterised in that** the respective separating web (6, 7) is positionable between a locked position, in which its separating web tooth (16, 16') is in engagement with the groove toothing (19), and a free position, in which its separating web tooth (16, 16') is not in engagement with the groove toothing (19).

2. Chain link according to claim 1, **characterised in that** the groove toothing (19) is provided on a lateral wall (18) on the groove (17).

3. Chain link according to claim 1 or 2, **characterised in that** the groove toothing (19) and the separating web tooth (16, 16') point in the longitudinal direction of the chain link.

4. Chain link according to one of claims 1 to 3, **characterised in that** the separating web (6, 7) is transferable between the locked position and the free position by a lateral turn through its longitudinal direction.

5. Chain link according to one of claims 1 to 4, **characterised in that** the separating web tooth (16, 16') protrudes from an elongate guide member (15, 15'), which extends in the transverse direction of the chain link, said guide member being integrally connected to the separating web (6, 7) and being guidable in the groove (17).

## Revendications

1. Elément de chaîne pour chaînes d'alimentation en énergie avec deux articulations latérales (2, 3) disposées l'une parallèlement à l'autre, deux traverses (4,5) reliant les articulations latérales (2, 3), au moins une des deux traverses présente sur sa face interne une rainure (17) avec une denture à rainure (19) s'étendant dans le sens transversal de l'élément de chaîne, ainsi que disposés entre les traverses (4, 5) et avec les articulations latérales (2, 3) étant à peu près parallèles l'une à l'autre des étais de séparation (6, 7) avec à chaque fois au moins une dent d'étai de séparation (16, 16') pouvant être mise en prise avec la denture à rainure (19),
**caractérisé en ce que**
l'étai respectif (6, 7) peut être positionné entre une position de crantage dans laquelle sa dent d'étai de séparation (16, 16') est mise en prise avec la denture à rainure (19), et une position libre, dans laquelle sa dent d'étai de séparation (16, 16') est désengagée de la denture à rainure (19).

2. Elément de chaîne selon la revendication 1,
**caractérisé en ce que**
la denture à rainure (19) est formée sur une paroi latérale (18) sur la rainure (17).

3. Elément de chaîne selon la revendication 1 ou 2,
**caractérisé en ce que**
la denture à rainure (19) et la dent de l'étai de séparation (16, 16') se présentent dans le sens longitudinal de l'élément de chaîne.

4. Elément de chaîne selon l'une quelconque des revendications 1 à 3,
**caractérisé en ce que**
l'étai de séparation (6, 7) est transférable par un mouvement rotatif latéral autour de son sens longitudinal entre la position de crantage et la position libre.

5. Elément de chaîne selon l'une quelconque des revendications 1 à 4,
**caractérisé en ce que**
la dent de l'étai de séparation (16, 16') sort d'un élément de guidage (15, 15') allongé étant dans le sens transversal de l'élément de chaîne, lequel élément de guidage est assemblé en une seule pièce avec l'étai de séparation (6, 7) et peut être guidé dans la rainure (17).
